**Europäisches Patentamt**

**European Patent Office**

**Office européen des brevets**

(11) Veröffentlichungsnummer: **0 524 509 A1**

## (12) EUROPÄISCHE PATENTANMELDUNG

(21) Anmeldenummer: **92111824.6**

(22) Anmeldetag: **10.07.92**

(51) Int. Cl.5: **C08G 69/20**, C08L 77/02,
//(C08L77/02,9:02)

(30) Priorität: **23.07.91 DE 4124319**

(43) Veröffentlichungstag der Anmeldung:
**27.01.93 Patentblatt 93/04**

(84) Benannte Vertragsstaaten:
**DE FR GB IT**

(71) Anmelder: **BAYER AG**

**W-5090 Leverkusen 1 Bayerwerk(DE)**

(72) Erfinder: **Heinz, Hans-Detlef, Dr.**
**Breslauer Strasse 31**
**W-4150 Krefeld(DE)**
Erfinder: **Fahnler, Friedrich, Dipl.-Ing.**
**Wimmersweg 60**
**W-4150 Krefeld 11(DE)**

(54) **Kautschukhaltige Lactammischungen.**

(57) Die Erfindung betrifft flüssige bzw. schmelzbare Lactammischungen, welche spezielle, im wesentlichen statistische Dien-/Nitrilmonomerkautschuke sowie bestimmte Gußpolyamidaktivatoren auf Isocyanatbasis enthalten.

EP 0 524 509 A1

Die Erfindung betrifft flüssige bzw. schmelzbare Lactammischungen, welche spezielle, im wesentlichen statistische Dien-/Nitrilmonomerkautschuke sowie bestimmte Gußpolyamidaktivatoren auf Isocyanatbasis enthalten.

Gußpolyamidteile, z.B. aus ε-Caprolactam hergestellt, weisen bekanntlich ein hohes Niveau der mechanischen Eigenschaften auf; aufgrund ihrer gegenüber Standardspritzgußteilen erhöhten Kristallinität sowie der wesentlich höheren Molekulargewichte sind fast alle mechanischen Eigenschaftswerte gegenüber durch Polykondensation hergestellten Polyamiden verbessert. Aus diesem Grund ist Gußpolyamid ein attraktiver Werkstoff.

Ein Nachteil gegenüber den durch Polykondensation hergestellten Polyamiden liegt aber darin, daß anionisch polymerisiertes Polyamid sich im allgemeinen nicht thermoplastisch verarbeiten läßt Alle Zusatzstoffe, die im Formteil anwesend sein sollen, müssen daher im allgemeinen vor der Polymerisation in die Lactamschmelze eingebracht werden.

Die Herstellung von Gußpolyamidteilen, ausgehend von niedrigviskosen Lactamschmelzen und Katalysatoren sowie Aktivatoren (aktivierte anionische Polymerisation) ist bekannt (z.B. Vieweg, Müller; Kunststoff-Handbuch Bd. VI, Carl Hanser Verlag, München 1966). Gegenüber Polyurethan-RIM-Systemen ist die Verfahrenstechnik einfacher, da z.B. aufgrund der sehr niedrigviskosen Lactamschmelzen drucklos und unter Einsatz einfacher Pumpen gefördert werden kann.

Es ist zwar bekannt (EP 0 131 113), ungesättigte Nitrilkautschuke in Caprolactam zu lösen und die Schmelze anionisch, unter Verwendung von Acyllactamen (N-Acetyl-Caprolactam) und Grignardverbindungen als Aktivatoren, zu polymerisieren.

Das System Acyllactam/Lactam/Nitril-Kautschuk aus EP 0 131 113 weist den Nachteil auf, daß sowohl Acyllactame als auch insbesondere Grignardverbindungen sehr reaktive und feuchtigkeitsempfindliche Substanzen sind, deren Herstellung und Handhabung aufwendig sind. Es wäre daher wünschenswert, ein einfacheres Aktivator-/Katalysatorsystem zur Polymerisation Nitrilkautschuk-haltiger Lactamschmelzen zu finden. Die Tatsache, daß ausschließlich Acyllactame und Grignardverbindungen in EP 0 131 113 erwähnt sind, ließ allerdings vermuten, daß es kein anderes System gibt.

Es wurde nun völlig überraschend gefunden, daß Nitrilkautschukhaltige Lactamschmelzen sehr gut polymerisiert werden können, indem aliphatische Isocyanate als Aktivatoren in Kombination mit Natrium- oder Kaliumlactamat als Katalysatoren zur Durchführung der Polymerisation eingesetzt werden. Beide Substanzen sind vergleichsweise einfach zu handhaben. Weiterhin wurde völlig überraschend gefunden, daß die Polymerisation dieser Lactamschmelzen im Vergleich zu Nitrilkautschuk-freien Lactamschmelzen beschleunigt verlaufen kann, d.h., die Kombination von Nitrilkautschuken, aliphatischen Isocyanaten und insbesondere Natriumcaprolactamat kann zu einer erhöhten Wirtschaftlichkeit bei der Gußpolyamidherstellung führen.

Gegenstand der Erfindung sind daher flüssige bzw. schmelzbare Lactammischungen aus
1) 85-99,9 Gew.-% (bezogen auf 1) + 2)) Lactamen mit mindestens 4 C-Atomen im Ring, welche anionisch polymerisierbar sind,
2) 0,1-15 Gew.-% (bezogen auf 1) + 2)) im wesentlichen statistischer Dien-/Nitrilmonomer-Copolymerer welche noch untergeordnete Mengen weiterer Monomerer enthalten können, und
3) 0,01-5 Gew.-% (bezogen auf 1) + 2)) aliphatischer Mono- oder Polyisocyanate.

Gegenstand der Erfindung ist ebenfalls ein Verfahren zur Polymerisation der erfindungsgemäßen Lactamschmelzen unter Verwendung von Natrium- oder Kaliumlactamaten, insbesondere Natriumcaprolactamat, als Katalysatoren, unter Bildung von Gußpolyamid(form)körpern.

Als Lactame 1) zur Herstellung des (Guß)Polyamids sind Lactame mit mindestens 4 C-Atomen im Ring (z.B. 4, 6-12 C-Atome) geeignet. Bevorzugte Lactame sind ε-Caprolactam und ω-Laurinlactam. Besonders bevorzugt wird ε-Caprolactam verwendet. Die Lactame können auch in einem beliebigen Gemisch von Lactamen der genannten Art eingesetzt werden.

Die Copolymerisate 2) sind als Substanzen prinzipiell bekannt oder können nach prinzipiell bekannten Verfahren hergestellt werden. Die Copolymerisate 2) besitzen elastische Eigenschaften, weshalb sie auch als "Kautschuke" (vom NBR-Typ) bezeichnet werden.

Die "Copolymeren 2) sind im wesentlichen statistische Copolymere auf Basis von Dienen und Nitrilmonomeren sowie gegebenenfalls weiteren Monomeren. Geeignete Diene sind 1,3-Butadien, 1,3-Isopren, 2,3-Dimethylbutadien und 1,3-Pentadien, um nur einige Beispiele zu nennen. Bevorzugte Diene sind Butadien und Isopren, insbesondere Butadien.

Als Nitrilmonomer ist insbesondere Acrynitril geeignet. Es können geringe Mengen (bis zu 10 Gew.-%, bevorzugt bis zu 8 Gew.-%) weiterer Vinylmonomerer, soweit sie sich mit den Dienen und Nitrilmonomeren copolymerisieren lassen, beispielsweise Vinylaromaten (wie Styrol, α-Methylstyrol, m- bzw. p-Methylstyrol etc) und ungesättigte Carbonsäuren (Acrylsäure, Methacrylsäure, Maleinsäure) bzw. deren Derivate (Ester, Halbester, Amide, Anhydride, etc) in den Copolymeren enthalten sein.

Die erfindungsgemäß einzusetzenden Copolymeren 2) sind also im wesentlichen statistische Dien-/Nitrilmonomer-, insbesondere Acrylnitril-Butadien-Copolymere mit kautschukartigen Eigenschaften. Sie bestehen zu 90 bis 45 Gew.-%, bevorzugt 85 bis 50 Gew.-% und besonders bevorzugt 82 bis 52 Gew.-%, aus mindestens einem Dien, zu 10 bis 55 Gew.-%, bevorzugt 15 bis 50 Gew.-% und besonders bevorzugt 18 bis 48 Gew.-%, aus mindestens einem Nitrilmonomeren und gegebenenfalls zusätzlich zu 0 bis 10 Gew.-%, bevorzugt 0 bis 8 Gew.-%, aus weiteren, geeigneten Monomeren.

Die Mooney-Viskosität ML 4 (100°C) der erfindungsgemäß einzusetzenden statistischen Dien-/Nitrilcopolymeren 2) soll mindestens 30, bevorzugt mindestens 50 und insbesondere bevorzugt mindestens 60, betragen.

Ganz besonders bevorzugte Copolymere 2) sind statistische Butadien-Acrylnitril-Copolymerisate enthaltend 25 bis 45 Gew.-% Acrylnitril mit einer Mooney-Viskosität ML 4 (100°C) von mindestens 75.

Die Copolymeren sind in den flüssigen bzw. geschmolzenen Lactammischungen in gelöster Form enthalten. Darunter wird im Rahmen der Erfindung bestanden, daß eine für das Auge Klare Schmelze i.w. (z.B. ei 135°C bis 160°C) vorliegt. Evtl. vorhandene, unlösliche Anteile sollten nicht mehr als maximal 5 Gew.-% betragen.

Die erfindungsgemäß einzusetzenden Copolymeren 2) sind grundsätzlich bekannt (siehe Encyclopedia of Polymer Science & Engineering, Vol. 2, Wiley Interscience, John Wiley & Sond, New York 1985).

Als Komponente 3) sind die üblichen aliphatischen Isocyanate geeignet. Vorzugsweise werden mindestens bifunktionelle Isocyanate wie Hexamethylendiisocyanat oder 4,4'-Diisocyanatodicyclohexylmethan eingesetzt. Besonders bevorzugt sind tri- und höherfurtktionelle Polyisocyanate, beispielsweise vom Allophanattyp oder vom Biurettyp. Besonders bevorzugte Polyisocyanate sind Biuretpolyisocyanate, abgeleitet vom Hexamethylendiisocyanat. Tri- und höherfunktionelle Isocyanate führen zu vernetztem, d.h., bei Raumtemperatur nicht in m-Kresol löslichem Gußpolyamid.

Zur Herstellung der erfindungsgemäßen Lactammischungen können beispielsweise die Lactame 1) mit den statistischen Copolymeren 2) gemischt und aufgeschmolzen oder auch die reinen, statistischen Copolymeren 2) (bzw. ihre Lösungen in flüchtigen Lösungsmitteln) mit geschmolzenen Lactamen gemischt werden (unter gegebenenfalls anschließendem Abziehen des Lösungsmittels). Im allgemeinen werden die Isocyanate 3) erst nach Lösen des Copolymeren 2) zugegeben, jedoch können auch alle Komponenten (Lactame, Verdicker, Isocyanate) zusammen homogenisiert werden.

Die Copolymeren 2) werden bevorzugt zu 1-10 und insbesondere bevorzugt zu 3-8 Gew.-% eingesetzt.

Die Isocyanate 3) werden bevorzugt zu 0,05-2 Gew.-% und insbesondere zu 0,1-1,5 Gew.-% eingesetzt.

Es können neben den erfindungsgemäß einzusetzenden Copolymerisaten und den Isocyanaten 3) auch (gegebenenfalls funktionalisierte) weitere Kautschuke bzw. Weichsegmente in einer Menge von bis zu 40 Gew.-% (bezogen auf die resultierende Schmelze) in der Schmelze enthalten sein, z.B. funktionalisierte (endgruppenhaltige, einbaufähige) Polyether, Polydiene u.a., wie sie im Stand der Technik für Polyamide beschrieben sind. Dabei sind als funktionalisierte Weichsegmente z.B. telechele, vorzugsweise hydrierte Polydiensegmente mit OH-, $NH_2$-, COOH- oder Ester-Endgruppen, bevorzugt $NH_2$-Gruppen, die chemisch z.B. als Blöcke, in das Polyamid mit eingebaut werden können, zu nennen.

Entsprechende Weichsegmente sowie Verfahren, sie in das Polyamid einzubauen, z.B. über Kopplung an den Aktivator, sind in großer Zahl bekannt.

Beispielsweise können aminierte Weichsegmente, z.B. Polyether, mit Polyisocyanaten zu Isocyanat-terminierten Weichsegmenten umgesetzt werden, welche dann einen polymeren Aktivator darstellen, oder es können OH-terminierte Polyether mit Dicarbonsäuredichloriden, z.B. Terephthalsäuredichlorid, zu Säurechlorid-terminierten Polyethern und anschließend mit einem Lactam zu einem polymeren Aktivator umgesetzt werden.

Je nach Art des Elastomersegments bzw. der Endgruppen bzw. der Art der Verknüpfung mit dem Aktivator kann die Wahl des Katalysators eingeschränkt sein, z.B. dann, wenn der Katalysator das Elastomersegment abbaut. Entsprechende optimale Kombinationen sind bevorzugt erfindungsgemäß einzusetzen.

In EP 131 113 werden Kombinationen aus Lactamen, Nitrilkautschuken und Acyllactamen offenbart. Isocyanate und Natrium- bzw. Kaliumlactamate tauchen dort nicht auf.

Die genannte Anmeldung enthält weiterhin keinerlei Hinweis darauf, daß Kombinationen aus Nitrilkautschuken, Isocyanaten und Natrium- bzw. Kaliumlactamaten zu erhöhten Polymerisationsgeschwindigkeiten führen können. Die vorliegende Erfindung kann daher nicht aus dem Stand der Technik abgeleitet werden.

Die erfindungsgemäßen Lactamschmelzen können noch übliche Zusatzstoffe wie Stabilisatoren, Entformungsmittel, Öle, Farbstoffe bzw. Pigmente u.a.m. enthalten.

Eine weitere bevorzugte Ausführungsform der Erfindung ist dadurch gekennzeichnet, daß die einzusetzenden statistischen Copolymerisate 2) mit Thermostabilisatoren(Antioxidantien)ausgerüstet sind, beispielsweise mit sterisch gehinderten Phenolen, aromatischen Aminen u.a.m., wie sie im Stand der Technik beschrieben sind. Bei Verwendung unstabilisierter Kautschuke kann bei der Herstellung größerer Formkörper durch anionische Polymerisation Rißbildung eintreten. Alternativ kann die Lactamschmelze auch gezielt zugesetzte Stabilisatoren enthalten.

Auch die Verwendung der erfindungsgemäßen Mischungen zur Herstellung von Polyamiden durch aktivierte anionische Polymerisation ist Gegenstand der Erfindung. Auch die resultierenden Gußpolyamidteile sind Gegenstand der Erfindung. Bevorzugter Katalysator ist Natriumcaprolactamat.

Die nachfolgenden Beispiele mit typischen Einsatzstoffen in typischen Mengen dienen zur Erläuterung der Erfindung, ohne sie darauf einzuschränken. Insbesondere können die Einzelbeispiele auch zu einer Bereichsbildung zwischen den beispielhaften Einzelwerten dienen.

Die Messung der Viskositäten erfolgte mit einem Haake-Viskotester bei Verwendung der schnellen Umdrehungsstufe (Rotationsviskosimeter).

Prozentangaben beziehen sich auf das Gewicht.

Beispiele

Tabelle 1

| NBR-Kautschuk | Acrylnitril [Gew.-%] | Butadien [Gew.-%] | Mooney-Viskosität ML 4 (100 %) |
|---|---|---|---|
| 1 | 28 | 72 | 45±5 |
| 2 | 28 | 72 | 65±7 |
| 3[1] | 28 | 72 | 95±7 |
| 4 | 34 | 66 | 65±7 |
| 5[1] | 34 | 66 | 80±5 |
| 6[1] | 39 | 61 | 45±5 |

[1] mit einem sterisch gehinderten Phenol stabilisiert

Beispiele 1-6

Aus NBR- Kautschukfellen wurden kleine Stücke von einigen Millimetern Kantenlänge geschnitten und unter $N_2$ und Rühren in $\epsilon$-Caprolactam bei ca. 150°C gelöst. Die Lösezeiten betrugen typischerweise 1,5-6 h.

Die Lösungen wurden auf 180°C aufgeheizt und durch Zugabe einer aliphatischen Polyisocyanatlösung (KU 2-8107; ein Produkt der BAYER AG) und Natriumcaprolactamat (20 %ige Lösung in Caprolactam) polymerisiert.

Die Experimente sind in Tabelle 2 näher charakterisiert.

Dem mechanischen Verhalten bei der Zerkleinerung der Formkörper nach weisen die Proben 3-6 eine wesentliche erhöhte Zähigkeit bei Temperaturen von ca -70°C auf.

Bei Probe 4 begann die Polymerisation schon nach ca 10 sec.; die analoge Probe ohne NBR-Kautschuk begann erst nach 30 sec. zu polymerisieren.

Vergleichsbeispiel 1

Beispiel 4 wurde wiederholt mit der Änderung, daß anstelle des Isocyanat-Aktivators N-Acetylcaprolactam eingesetzt wurden (in gleicher molarer Menge wie das Isocyanat). Es trat keine Polymerisation ein.

Das Vergleichsbeispiel demonstriert, daß der Austausch nur einer Startkomponente allein nicht nur keine Verbesserung bewirkt, sondern sogar die Polymerisation verhindert.

Tabelle 2

| Beispiel | Nitrilkautschuk Typ | Nitrilkautschuk [Gew.-%] | Lösezeit[1] [h] | KU2-8107[2] [Gew.-%] | Natriumcapro-[2] lactamat [Gew.-%] | Polymerisationszeit[3] [s] |
|---|---|---|---|---|---|---|
| 1 | 1 | 4 | 3,5 | 0,8 | 2 | 30 |
| 2 | 6 | 5 | 1,5 | 0,8 | 2 | 30 |
| 3 | 2 | 5 | 3 | 0,8 | 2 | 30 |
| 4 | 3 | 4 | - | 0,8 | 2 | 10 |
| 5 | 4 | 5 | 2,5-3 | 0,8 | 2 | 30 |
| 6 | 5 | 5 | 4 | 0,8 | | 25 |

1) Bei 150°C
2) Bezogen auf Caprolactam + Nitrilkautschuk; 20 %ige Mischung
3) Bei 180°C

## Patentansprüche

1. Flüssige bzw. schmelzbare Lactammischungen aus
   A) 85-99,9 Gew.-% (bezogen auf A) + B)) Lactamen mit mindestens 4 C-Atomen im Ring, welche anionisch polymerisierbar sind,
   B) 0,1-15 Gew.-% (bezogen auf A) + B)) im wesentlichen statistischer Dien-/Nitrilmonomer-Copolymerer welche noch untergeordnete Mengen weiterer Monomerer enthalten können, und
   C) 0,01-5 Gew.-% (bezogen auf A) + B)) aliphatischer Mono- oder Polyisocyanate.

2. Mischungen nach Anspruch 1, enthaltend bevorzugt 1-10 Gew.-% der Komponente B) bzw. 0,05-2 Gew.-% der Komponente C) und besonders bevorzugt 3-8 Gew.-% der Komponente 2) und 0,1-1,5 Gew.-% der Komponente C).

3. Mischungen nach Ansprüchen 1 und 2, enthaltend als Lactame A) insbesondere Caprolactam und Laurinlactam, besonders bevorzugt Caprolactam.

5

**4.** Mischungen nach Ansprüchen 1-3, dadurch gekennzeichnet, daß als Copolymere B) bevorzugt Copolymere aus 90-45 Gew.-% Butadien und 10-55 Gew.-% Acrylnitril und gegebenenfalls zusätzlich 0-10 Gew.-% weiterer Vinylmonomerer auf Basis von Vinylaromaten und ungesättigten Carbonsäuren (bzw. ihren Derivaten wie Estern, Anhydriden oder Amiden) eingesetzt werden, wobei die Mooney-Viskosität ML 4 (100°C) der statistischen Dien-/Nitril-Copolymerisate mindestens 30 betragen soll.

**5.** Mischungen nach Ansprüchen 1-4, dadurch gekennzeichnet, daß besonders bevorzugte Copolymere B) aus 85-50 Gew.-% und insbesondere bevorzugt 82-52 Gew.-% Butadien, 10-55 Gew.-% bzw. 15-50 Gew.-% Acrylnitril und 0-8 Gew.-% weiterer Monomerer bestehen, wobei die Mooneyviskositatswerte ML 4 (100°C) mindestens 50 und insbesondere bevorzugt mindestens 60 betragen, und daß ganz besodners bevorzugte Copolymere B) aus 25-45 Gew.-% Acrylnitril bzw. 55-75 Gew.-% Butadien sowie 0-8 Gew.-% Vinylaromaten und/oder ungesättigter Carbonsäuren(bzw. ihrer Derivate mit Mooney-Viskositäten von mindestens 75 eingesetzt werden, wobei die ganz besonders bevorzugten Copolymeren B) Stabilisatoren enthalten.

**6.** Mischungen nach Ansprüchen 1-5, enthaltend als Isocyanate C) bevorzugt mindestens trifunktionelle Isocyanate.

**7.** Mischungen nach Ansprüchen 1-6, dadurch gekennzeichnet, daß Weichsegmente gelöst oder dispergiert, in einer Menge von bis zu 40 Gew.-% (bezogen auf Gesamtmischung) anwesend sind.

**8.** Verwendung der Lactammischungen nach Ansprüchen 1 bis 7 zur Herstellung von Polyamiden durch aktivierte anionische Polymerisation zur Herstellung von Gußpolyamiden, unter Verwendung von Natrium- oder Kaliumlactamaten als Katalysatoren der aktivierten anionischen Polymerisation, sowie gegebenenfalls unter Zusatz üblicher Zusatzstoffe, bevorzugt unterhalb des Schmelzpunktes des jeweils entstehenden Polyamids.

**9.** Kautschukhaltige (Guß)Polyamid-Artikel, hergestellt aus Lactammischungen nach Ansprüchen 1 bis 7, unter Verwendung von Natrium- oder Kaliumlactamaten sowie gegebenenfalls weiterer üblicher Zusatzstoffe.

**10.** Verfahren zur Herstellung von (Guß)Polyamid-Artikeln unter Verwendung der Lactammischungen nach Ansprüchen 1 bis 7, dadurch gekennzeichnet daß die Lactammischungen bei Anwesenheit von Natrium- oder Kaliumlactamaten als Katalysatoren polymerisiert werden, bevorzugt unterhalb des Schmelzpunkts des jeweils entstehenden Polyamids, bevorzugt mit gegenüber Nitrilkautschukfreien Ansätzen verringerter Polymerisationszeit.

Europäisches
Patentamt

**EUROPÄISCHER RECHERCHENBERICHT**

Nummer der Anmeldung

EP 92 11 1824

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DATABASE WPI/DERWENT, AN=77-44379Y (25), Derwent Publications Ltd, London, GB; & JP-A-52 057 294 (MITSUBOSHI) 11-05-1977 --- | | C 08 G 69/20 <br> C 08 L 77/02 // <br> (C 08 L 77/02 <br> C 08 L 9:02 ) |
| A | EP-A-0 232 694 (MONSANTO) --- | | |
| A | EP-A-0 232 695 (MONSANTO) --- | | |
| A | EP-A-0 168 854 (STAMICARBON) --- | | |
| D,A | EP-A-0 131 113 (CONSIGLIO NAZIONALE DELLE RICERCHE) --- | | |
| A | PATENT ABSTRACTS OF JAPAN, Band 10, no. 103 (C-340), 18. April 1986; & JP-A-60 233 128 (AISHIN SEIKI) 19-11-1985 ----- | | |

**RECHERCHIERTE SACHGEBIETE (Int. Cl.5)**

C 08 G
C 08 L

Der vorliegende Recherchenbericht wurde für alle Patentansprüche erstellt

| Recherchenort | Abschlußdatum der Recherche | Prüfer |
|---|---|---|
| DEN HAAG | 28-10-1992 | LEROY ALAIN |